# FASCICULE DE BREVET EUROPEEN

(11) **EP 3 765 367 B1**
(45) Date de publication et mention de la délivrance du brevet: **01.10.2025**
(21) Numéro de dépôt: 19709489.9
(22) Date de dépôt: 08.03.2019
(51) Int. Cl.: B64D 11/06

(54) **ARRANGEMENT DE SIÈGES, NOTAMMENT D'UN AVION**
SITZANORDNUNG, INSBESONDERE VON EINEM FLUGZEUG
ARRANGEMENT OF SEATS, IN PARTICULAR FROM AN AIRCRAFT

(30) Priorité: 15.03.2018 FR 1870291
(43) Date de publication de la demande: 20.01.2021
(73) Titulaire: Safran Seats, 78370 Plaisir (FR)
(72) Inventeur: BONNEFOY, Bastien, 36100 ISSOUDUN (FR); FOUCHER, Benjamin, 37000 TOURS (FR)
(74) Mandataire: Marconnet, Sébastien
(86) Numéro de dépôt international: PCT/EP2019/055869
(87) Numéro de publication internationale: WO 2019/175053

(56) Documents cités:
- EP-A1- 3 225 548
- EP-B1- 3 802 321
- WO-A1-2018/033599
- WO-A1-2019/234041
- WO-A2-2007/072045
- US-A1- 2003 146 654
- US-A1- 2013 241 247
- US-A1- 2015 053 817

## Description

La présente invention porte sur un agencement de sièges, en particulier de sièges pour passagers d'un véhicule de transport, notamment d'un avion. L'invention vise à proposer un tel agencement de sièges qui assure à la fois le confort et la sécurité des passagers, tout en prévoyant de préserver leur intimité. L'invention trouve ainsi une application particulièrement avantageuse avec les sièges d'avion.

Les sièges d'avion de type "Classe Affaires" offrent aux passagers différentes positions de confort, d'une position "assise" jusqu'à une position "couchette", dans laquelle le siège définit un plan de couchage sensiblement horizontal pour que le passager puisse s'allonger.

Des positions intermédiaires de confort sont aussi proposées, telles que la position "relax" dans laquelle le dossier est fortement incliné. Généralement, ces positions intermédiaires sont obtenues par l'inclinaison du dossier pivotant autour d'un axe horizontal et perpendiculaire à un axe d'extension du siège. Le passager peut alors rester sur le siège lors de transitions entre les différentes positions.

La couchette est généralement constituée notamment du dossier, de l'assise, d'un repose-jambes et d'un repose-pieds, ces derniers pouvant être fixes ou liés à la cinématique du siège.

Certains agencements de sièges pour cabine d'avion de type "Classe Affaires" permettent un accès direct à un couloir de circulation pour tous les passagers, via un passage disposé entre deux sièges agencés l'un derrière l'autre selon un axe longitudinal de la cabine de l'avion. Les passagers peuvent ainsi sortir de leur siège facilement notamment lorsque le siège est en position "couchette".

De ce fait, lorsqu'un passager ou un personnel de bord marche dans un couloir de circulation situé latéralement par rapport au siège, notamment en direction de l'arrière de la cabine de l'avion, il est susceptible d'être en contact visuel direct avec un passager assis dans un siège. Une telle situation engendre une absence d'intimité, qui peut apporter un sentiment d'inconfort pour le passager assis.

Le document WO2018/033599 décrit un agencement de siège, notamment destiné à être installé dans une cabine d'avion, comprenant au moins un siège avant et au moins un siège arrière comportant respectivement un siège pouvant passer d'une position assise à une position couchette, un passage transversal permettant l'accès à un couloir de circulation. L'agencement de siège comprend des moyens mobiles d'obturation aptes à obturer au moins partiellement le passage transversal.

Le document WO2019/234041 décrit un arrangement de sièges comprenant au moins un premier ensemble d'unités de sièges comportant une première unité de siège et une deuxième unité de siège, au moins un deuxième ensemble d'unités de sièges comportant une première unité de siège et une deuxième unité de siège, un espace central s'étendant entre le premier ensemble d'unités de sièges et le deuxième ensemble d'unités de sièges. Des moyens de fermeture au moins en partie flexibles sont mobiles entre une position rangée dans laquelle les moyens de fermeture sont dégagés de l'espace central et une position déployée dans laquelle les moyens de fermeture obturent l'espace central.

L'invention vise notamment à remédier efficacement à cet inconvénient en proposant un arrangement de sièges défini selon la revendication 1.

L'invention permet ainsi de définir un espace intérieur clos autour du siège procurant un sentiment d'intimité au passager en lui évitant d'être à la vue directe des autres passagers et/ou personnels de bord marchant dans le couloir de circulation.

Selon une réalisation, les moyens de fermeture comportent un rideau, notamment réalisé au moins en partie en tissu, et un dispositif de rappel du rideau en position rangée de manière à créer une tension sur le rideau lorsque le rideau est en position déployée.

Selon une réalisation, le dispositif de rappel comporte un enrouleur muni d'un axe autour duquel au moins une partie du rideau est enroulé lorsque le rideau est en position rangée.

Selon une réalisation, l'enrouleur est fixé sur l'unité de siège avant.

Selon une réalisation, l'enrouleur est disposé entre un dossier et une coque fixe de l'unité de siège arrière.

Selon une réalisation, ledit arrangement de sièges comporte des moyens de maintien du rideau en position déployée, tels qu'une poignée destinée à coopérer avec un support porté par l'unité de siège arrière et/ou un dispositif magnétique.

Selon une réalisation, les moyens de rigidification s'étendent au-delà du guide.

Selon une réalisation, ledit arrangement de siège comporte des moyens de génération d'un motif lumineux.

Selon une réalisation, les moyens de génération d'un motif lumineux comportent une source lumineuse et des fils translucides disposés dans une épaisseur du rideau.

Selon une réalisation, les moyens de génération d'un motif lumineux comportent une dalle lumineuse disposée à l'intérieur du rideau.

Selon une réalisation, les moyens de génération d'un motif lumineux comportent un assemblage de lampes, notamment de type LED.

Selon une réalisation, des perforations réalisées dans le rideau permettent de faire apparaître un motif souhaité.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- La figure 1 est une vue schématique de dessus d'une cabine d'un avion intégrant un arrangement de sièges selon la présente invention;
- Les figures 2 et 3 sont des vues en perspective d'un ensemble de deux sièges séparés par un passage apte à être obturé par des moyens de fermeture selon l'invention;
- Les figures 4a et 4b sont des vues de l'ensemble de deux sièges montrant les moyens de fermeture respectivement en position rangée et en position déployée;
- La figure 5 est une vue de côté illustrant la structure d'un rideau constituant les moyens de fermeture selon l'invention;
- La figure 6 est une vue de dessus montrant une implantation d'un enrouleur de rideau derrière un dossier de siège;
- La figure 7 est une vue en coupe transversale d'un guide des moyens de fermeture selon la présente invention;
- La figure 8 est une vue en perspective d'une poignée utilisée pour faire passer le rideau selon l'invention d'une position rangée à une position déployée;
- La figure 9 est une vue de côté de l'ensemble de deux sièges montrant une variante de réalisation du dispositif de rappel à ressort;
- La figure 10 est une vue de côté d'un ensemble de deux sièges montrant l'intégration de moyens de rigidification à l'intérieur du rideau selon la présente invention;
- La figure 11 est une vue en perspective d'un ensemble de deux sièges munis d'un rideau intégrant des moyens de génération d'un motif lumineux selon la présente invention;
- Les figures 12a, 12b, et 12c sont des vues illustrant trois modes de réalisation des moyens de génération d'un motif lumineux selon la présente invention;
- Les figures 13a et 13b montrent des moyens de fermeture constitués par un rideau semi-flexible respectivement dans une position rangée et dans une position déployée;
- La figure 14 est une vue en perspective illustrant une phase de déploiement du rideau semi-flexible selon la présente invention;
- La figure 15 est une vue détaillée des moyens de maintien magnétiques du rideau semi-flexible en position rangée et en position déployée;
- La figure 16 est une vue de face des différents éléments composant un rideau semi-flexible selon la présente invention;
- La figure 17 est une vue en perspective d'un rideau semi-flexible ayant une configuration en accordéon en position rangée.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

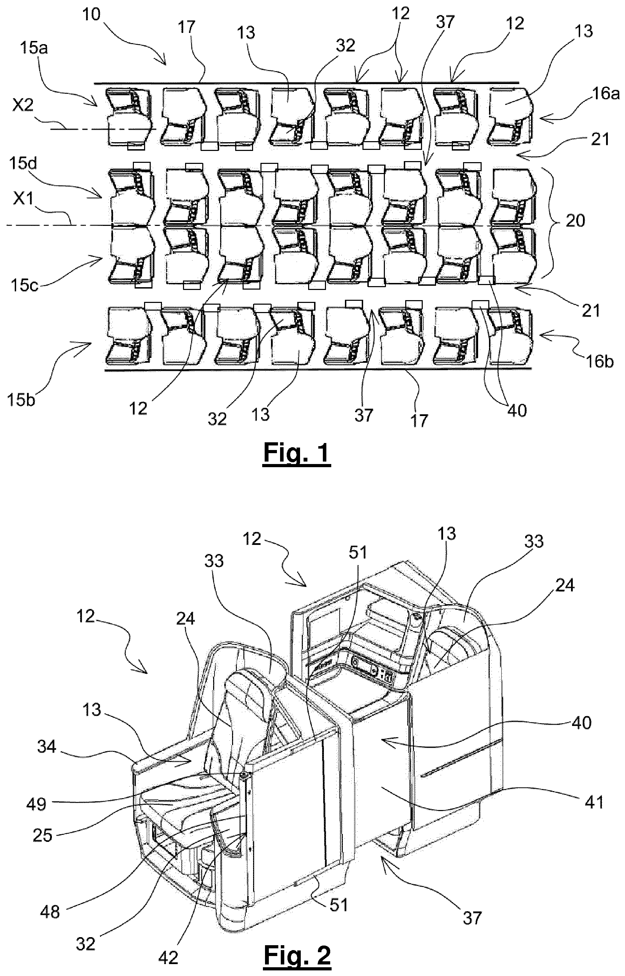

La figure 1 montre une cabine d'avion 10 s'étendant selon un axe longitudinal X1 comportant un arrangement de sièges 11. L'arrangement de sièges 11 selon la présente invention comprend une pluralité d'unités de sièges 12 comportant respectivement un siège individuel 13. Avantageusement, le siège 13 est apte à passer d'une position "assise", correspondant à la position utilisée notamment lors des phases d'arrêt, de décollage, et d'atterrissage de l'avion, et une position "couchette", dans laquelle le siège 13 définit un plan de couchage sensiblement horizontal pour le passager. En particulier, la position "assise" et la position "couchette" constituent des configurations du siège 13 dans deux positions extrêmes. Selon des variantes de réalisation, le siège 13 pourra également prendre des positions intermédiaire, dites positions relax, entre ces deux positions extrêmes.

La pluralité d'unités de sièges 12 sont disposées selon au moins une rangée 15a s'étendant préférentiellement selon l'axe longitudinal X1 de la cabine d'avion 10. Selon l'exemple présenté sur la figure 1, la pluralité d'unités de sièges 12 sont disposées selon quatre rangées 15a, 15b, 15c et 15d.

Selon divers modes de réalisation particuliers, à l'intérieur de la rangée 15a, respectivement les rangées 15a, 15b, 15c et 15d, l'unité de sièges 12 peut être orientée de telle façon que le siège 13 soit tourné vers l'avant et/ou vers l'arrière de l'avion.

Il est à noter que, dans la suite de la description, les termes "avant" et "arrière" employés en relation avec l'expression "unité de siège" définissent localement une position relative du siège 13 à l'intérieur de la rangée 15a, respectivement les rangées 15a, 15b, 15c et 15d, et ne se réfèrent aucunement à une orientation du siège 13 à l'intérieur de la cabine d'avion 10. En d'autres termes, l'expression "unité de siège avant" signifie que l'unité de siège est positionnée directement devant une autre unité de siège à l'intérieur de la rangée, tandis que l'expression "unité de siège arrière" signifie que l'unité de siège est positionnée directement derrière une autre unité de siège à l'intérieur de la rangée.

Selon l'exemple de réalisation présenté, l'arrangement de sièges 11 comporte deux groupes latéraux 16a, 16b comportant des unités de sièges 12. Les deux groupes latéraux 16a, 16b sont constitués respectivement par deux rangées 15a, 15b d'unités de sièges 12 positionnées le long d'une paroi latérale 17 du fuselage de la cabine d'avion 10. L'arrangement de sièges 11 comporte également un groupe central 20. Le groupe central 20 est préférentiellement constitué de deux rangées 15c, 15d d'unités de sièges 12. Dans un tel agencement, les deux rangées 15c, 15d d'unités de sièges 12 sont particulièrement accolées latéralement l'une par rapport à l'autre.

Les groupes latéraux 16a, 16b sont respectivement séparés du groupe central 20 par un couloir de circulation 21. Selon la configuration présenté en figure 1, deux couloirs de circulation 21 sont donc prévus dans la cabine d'avion 10, spécifiquement entre chaque groupe latéral 16a, 16b et le groupe central 20. En variante, les deux groupes latéraux 16a, 16b pourront être formés chacun par plusieurs rangées d'unités de sièges 12.

Chaque siège 13 présente un axe d'extension X2 correspondant sensiblement à une direction d'extension longitudinale du siège 13. En particulier, l'axe d'extension X2 correspond à la direction d'extension longitudinale du siège 13 en position "couchette". En l'occurrence, l'axe X2 est sensiblement parallèle par rapport à l'axe longitudinal X1 de la cabine d'avion, c'est-à-dire qu'il forme un angle inférieur à 10 degrés par rapport à l'axe X1. En variante, l'axe d'extension X2 d'un siège forme un angle non nul supérieur à 10 degrés avec l'axe longitudinal X1 de la cabine d'avion 10. On pourra alors définir des configurations de sièges en chevron dans laquelle les deux unités de sièges 12 forment un « V ». La pointe de la forme en « V » pourra être située devant ou derrière des dossiers 24 des sièges 13 lorsqu'il s'agit d'une configuration en chevron inversé.

Dans l'exemple représenté, les sièges 13 sont orientés vers l'avant de la cabine d'avion 10, c'est-à-dire en direction d'une zone comportant un cockpit de l'avion. Dans un mode de réalisation alternatif, les sièges 13 sont orientés vers l'arrière de la cabine d'avion 10, c'est-à-dire en direction d'une zone opposée du cockpit de l'avion.

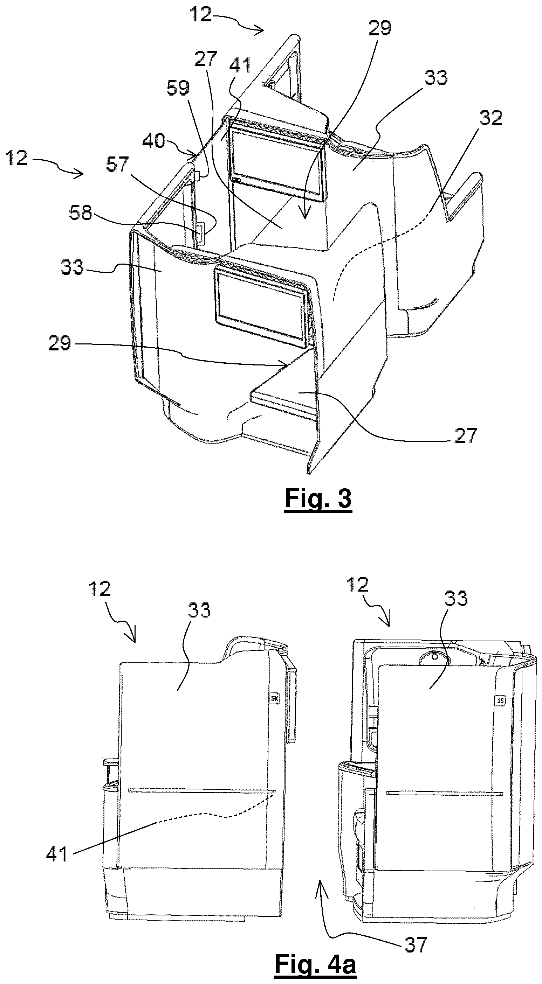

Comme cela est particulièrement illustré par la figure 2, chaque unité de siège 12 comporte un siège 13 ayant un dossier 24, notamment réglable en inclinaison, et une assise 25, notamment potentiellement réglable en inclinaison. De plus, le siège 13 pourra comprendre un repose-jambes (non représenté), notamment réglable en inclinaison. De plus, l'unité de siège 12 peut comporter un repose-pieds 27, notamment visible en figure 3.

Selon une variante, le repose-pieds 27 peut consister en un coussin fixe, notamment agencé dans un logement 29 dédié à recevoir les pieds du passager. Préférentiellement, le repose-pieds 27 se situe dans le prolongement du siège 13 lorsque ce dernier se trouve en position "couchette".

L'unité de siège 12 peut également comporter un meuble latéral 32, susceptible notamment de servir de tablette fixe et/ou de rangement de tablette repas.

L'unité de siège 12 peut également comporter une coque fixe 33 apte à assurer une séparation. Une telle coque fixe 33 permet donc de garantir l'intimité de chaque passager. De façon avantageuse, afin de remplir une telle fonction de garantie d'intimité, la coque fixe 33 s'étend autour du dossier 24 du siège 13 afin de créer un espace intérieur, en partie clos, dans lequel est agencé le siège 13.

Lorsque deux unités de sièges 12 sont disposées l'une derrière l'autre, avantageusement, les deux unités de sièges 12 sont agencées de sorte à définir un recouvrement vertical, au moins partiel, entre elles. Le recouvrement vertical entre les deux unités de sièges 12 peut consister, tel que représenté, en un positionnement du logement 29 du repose-pieds 27 de l'unité de siège 12 "arrière" sous le meuble latéral 32 de l'unité de siège 12 "avant" correspondante.

On distingue en outre une unité de siège 12 "gauche" dans laquelle le meuble latéral 32 est disposé à gauche du siège 13 et une unité de siège 12 "droite" dans laquelle le meuble latéral 32 est disposé à droite du siège 13. Une rangée 15a, 15b, 15c, 15d est formée par une alternance d'unités de sièges 12 "gauche" et d'unités de sièges 12 "droite", de sorte que chaque siège 13 est situé en face d'un meuble latéral 32 de l'unité de siège avant comportant le logement 29 du repose-pieds 27 correspondant.

De plus, l'unité de siège 12 peut comprendre un accoudoir 34. Suivant certaines configurations, l'accoudoir 34 peut être escamotable de telle sorte qu'il est mobile entre une position "remontée" dans laquelle l'accoudoir 34 est apte à soutenir une partie du corps du passager, en particulier un bras du passager, et une position "stockée" dans laquelle l'accoudoir 34 est apte à être positionné au même niveau que l'assise 25 du siège 13, en particulier lorsque ce dernier est en position assise. Le passager pourra ainsi tirer profit de positions de confort en plaçant, par exemple, une partie de son corps, notamment une jambe, sur l'accoudoir 34 en position "stockée".

Tel que visible notamment sur les figures 1, 2 et 4a, un passage transversal 37 est ménagé entre deux unités de sièges 12 consécutives d'une rangée 15a, respectivement les rangées 15a, 15b, 15c et 15d, à savoir une unité de siège 12 avant et une unité de siège 12 arrière. Plus spécifiquement selon l'exemple de réalisation présenté, le passage transversal 37 s'étend entre les coques 33 de l'unité de siège 12 avant et de l'unité de siège 12 arrière.

Le passage transversal 37 est agencé de sorte à permettre une circulation du passager du siège 13 vers le couloir de circulation 21, notamment lorsque le siège 13 est en position couchette.

Selon la présente invention, des moyens de fermeture 40, en particulier des moyens de fermeture 40 amovibles, sont disposés dans le passage transversal 37. Les moyens de fermeture 40 sont aptes à assurer la fermeture du passage transversal 37.

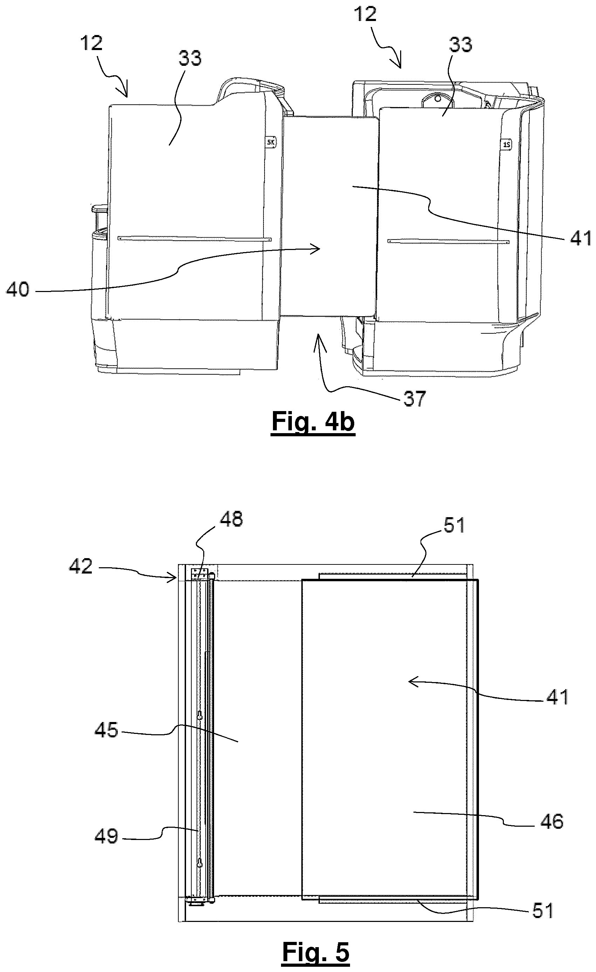

Lorsque les moyens de fermeture 40 sont déployés, tel que cela est illustré notamment sur les figures 2 et 4b, le passage transversal 37 ménagé entre deux unités de sièges 12 consécutives de la rangée 15a, respectivement les rangées 15a, 15b, 15c, 15d, est obturé par les moyens de fermeture 40.

En conséquence, le passager assis dans le siège 13 est séparé de tout passager et/ou personnel de bord marchant dans le couloir de circulation 21 par les moyens de fermeture 40 en coopération avec la coque fixe 33 s'étendant autour du siège 13. Le passager se retrouve ainsi assis dans une zone d'intimité définie par l'espace clos ainsi créé.

Dans le mode de réalisation des figures 2 à 12b, les moyens de fermeture 40 comportent un rideau 41, notamment réalisé en tissu, et un dispositif de rappel 42 du rideau 41 en position rangée de manière à créer une tension sur le rideau 41 lorsque le rideau 41 est en position déployée.

En l'occurrence, comme on peut le voir sur la figure 5, le rideau 41 comporte une première partie 45 réalisée dans un tissu fin, dite partie technique, et une deuxième partie 46 réalisée dans un matériau épais fixée sur la première partie 45 en étant par exemple cousue sur cette première partie 45. La deuxième partie 46 est plus épaisse que la première partie 45, c'est la raison pour laquelle les termes "fin" et "épais" doivent être compris relativement à l'épaisseur de ces deux parties 45 et 46. La deuxième partie 46 est dite partie esthétique car elle pourra présenter des motifs, comme par exemple le logo d'une compagnie aérienne. La deuxième partie 46 pourra par exemple être réalisée en tissu, en alcantara, ou en cuir pour augmenter la qualité perçue de l'ensemble.

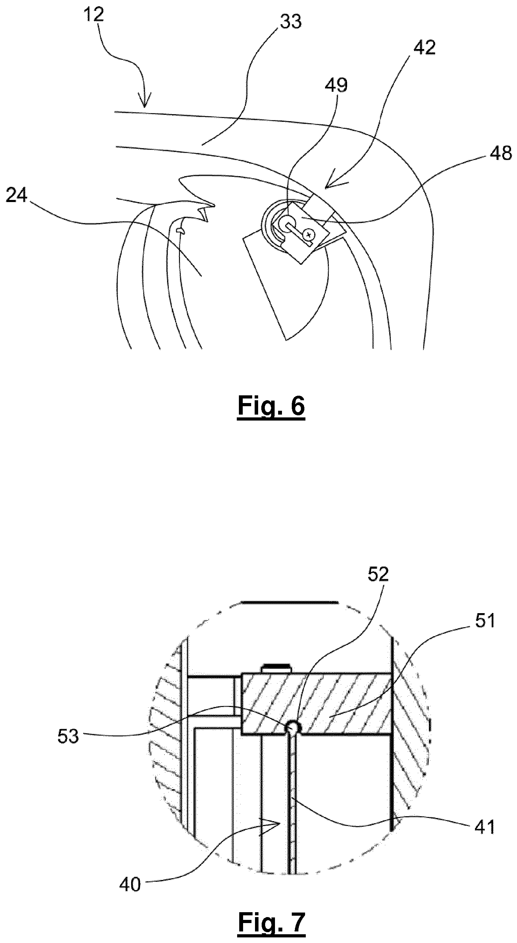

En outre, le dispositif de rappel 42 comporte un enrouleur 48 muni d'un axe 49 autour duquel la partie technique du rideau 41 est enroulé lorsque le rideau 41 est en position rangée. L'enrouleur 48 présente une orientation verticale lorsqu'il est installé sur l'unité de siège 12. Dans l'exemple représenté, l'enrouleur 48 est fixé sur l'unité de siège 12 avant. En variante, l'enrouleur 48 est fixé sur l'unité de siège 12 arrière. L'enrouleur 48 pourra être disposé entre le dossier 24 et la coque 33 du siège arrière, tel que montré sur la figure 6.

On pourra prévoir au moins un, de préférence deux guides 51 en translation du rideau 41 fixés sur la coque 33 de l'unité de siège 12 avant, tel que montré sur les figures 2 et 5. Les guides 51 coopèrent respectivement avec le bord supérieur et le bord inférieur du rideau 41. Sur la figure 7, un guide 51 comporte un logement 52 de forme complémentaire d'un profil 53 fixé sur le rideau 41. Le profil 53 est muni en coupe d'une tête de section ronde, ou alternativement en forme de queue d'aronde, ou toute autre forme adapté à l'application.

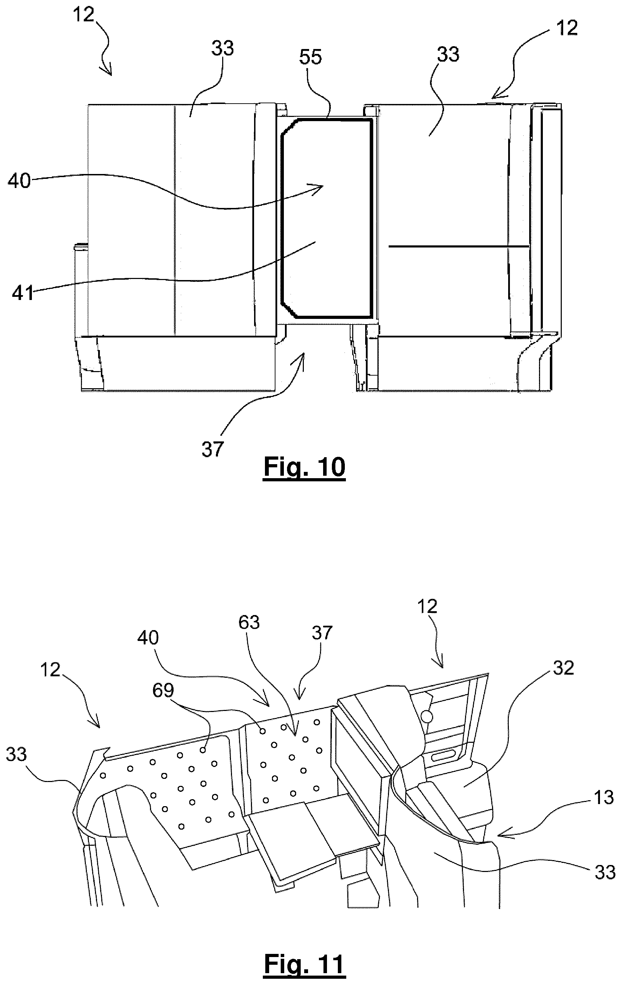

Comme on peut le voir sur la figure 10, le rideau 41 comporte des moyens de rigidification 55, tels que des cordons et/ou des bords rigides et/ou une plaque flexible. Ces moyens 55 pourront s'étendre suivant un contour du rideau 41.

Les moyens de rigidification 55 sont disposés au moins dans une partie de la zone du rideau 41 destinée à coopérer avec le guide 51. Cette zone correspond à la partie esthétique 46 du rideau 41.

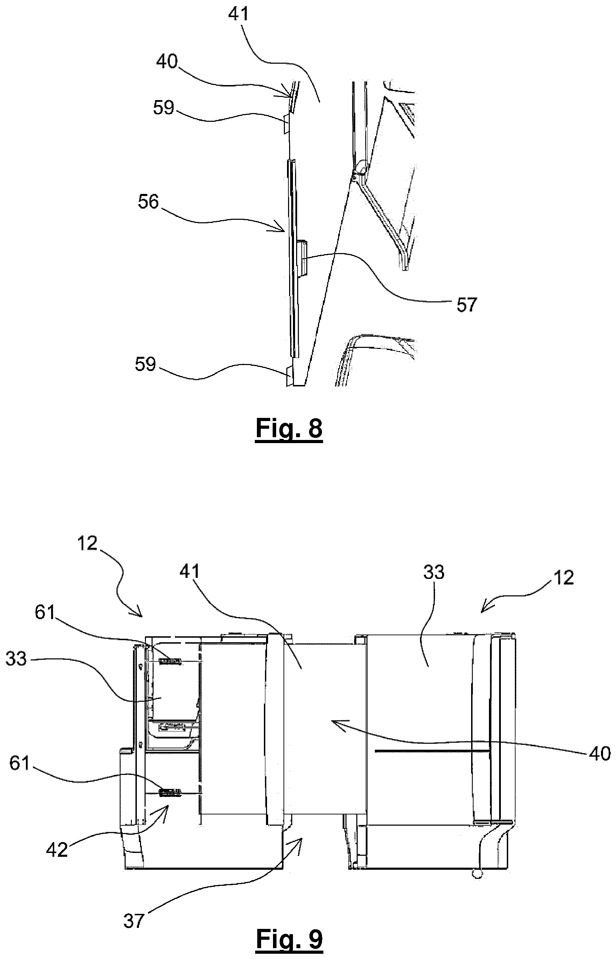

Le rideau 41 comporte en outre des moyens de maintien 56 dudit rideau 41 en position déployée. Comme cela est montré sur la figure 8, ces moyens de maintien 56 comportent par exemple une poignée 57 formant crochet destinée à coopérer avec un support 58, notamment en forme d'équerre, porté par l'unité de siège 12 arrière (cf. figure 3). On pourra également utiliser en combinaison des dispositifs magnétiques de maintien 59 disposés de part et d'autre de la poignée 57. Les moyens de maintien 56 pourront être sécables au-delà d'un effort limite. Alternativement, le rideau 41 pourra comporter des coutures fusibles.

Ainsi, en fonctionnement, le passager pourra tirer le rideau 41 vers lui au moyen de la poignée 57 suivant une direction rectiligne, de sorte que le rideau 41 pourra coulisser suivant les guides 51. Une fois que le rideau 41 a parcouru sa course jusqu'à la position déployée, le passager fait coopérer la poignée 57 avec son support de retenue 58 tandis que les éventuels dispositifs de maintien magnétiques 59 disposés de part et d'autre de la poignée 57 génèrent également un effort de retenue. La tension appliquée par l'enrouleur 48 permet de maintenir le rideau 41 tendu en position déployée. De préférence, tel que cela est montré sur la figure 5, les moyens de rigidification 55 s'étendent au-delà des guides 51 pour garantir le guidage même en cas d'effort trop important du passager sur le rideau 41.

En dégageant la poignée 57 de son support, l'effort de rappel appliqué par l'enrouleur 48 est supérieur à l'effort de retenue des dispositifs magnétiques de maintien 59, de sorte que le rideau 41 revient automatiquement dans sa position rangée.

En variante, dans le mode de réalisation de la figure 9, le dispositif de rappel 42 comporte au moins un organe élastique de rappel 61, tel qu'un ressort. Dans l'exemple représenté, on utilise deux ressorts 61 fixés chacun d'une part à l'unité de siège 12 avant et d'autre part à un bord d'extrémité du rideau 41.

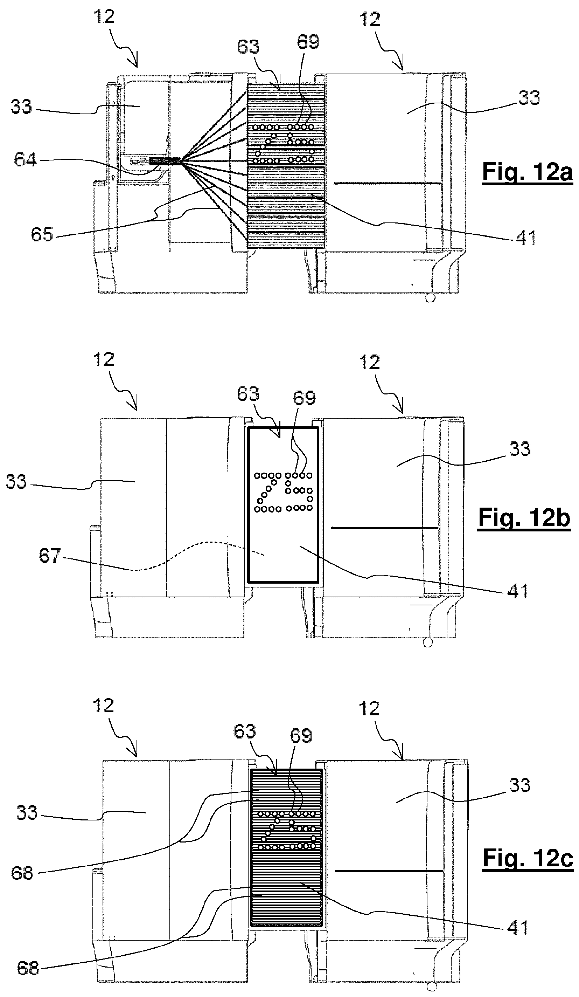

Dans le mode de réalisation de la figure 11, le rideau 41 intègre des moyens 63 de génération d'un motif lumineux. Ces moyens 63 pourront comporter une source lumineuse 64 et des fils translucides 65 disposés dans une épaisseur du rideau 41, tel que cela est illustré par la figure 12a, ou une dalle lumineuse 67, de préférence souple, disposée à l'intérieur ou sur du rideau 41, tel que cela est illustré par la figure 12b. Alternativement, on pourra utiliser un assemblage de lampes 68, notamment de type LED, tel que cela est illustré par la figure 12c. Dans les tous les cas, une configuration de perforations 69 réalisées dans le rideau 41 permet de faire apparaître le motif souhaité.

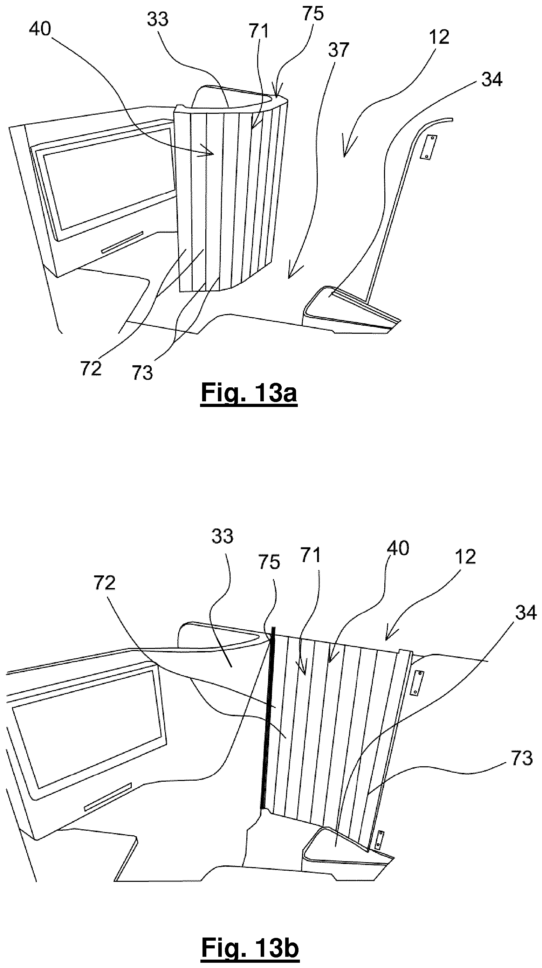

Dans les modes de réalisation des figures 13 à 17, les moyens de fermeture 40 comportent un rideau semi-flexible 71 ayant une alternance de lames 72 verticales 72 et de zones de pliage 73. Le rideau semi-flexible 71 est pliable au moins en partie suivant les zones 73.

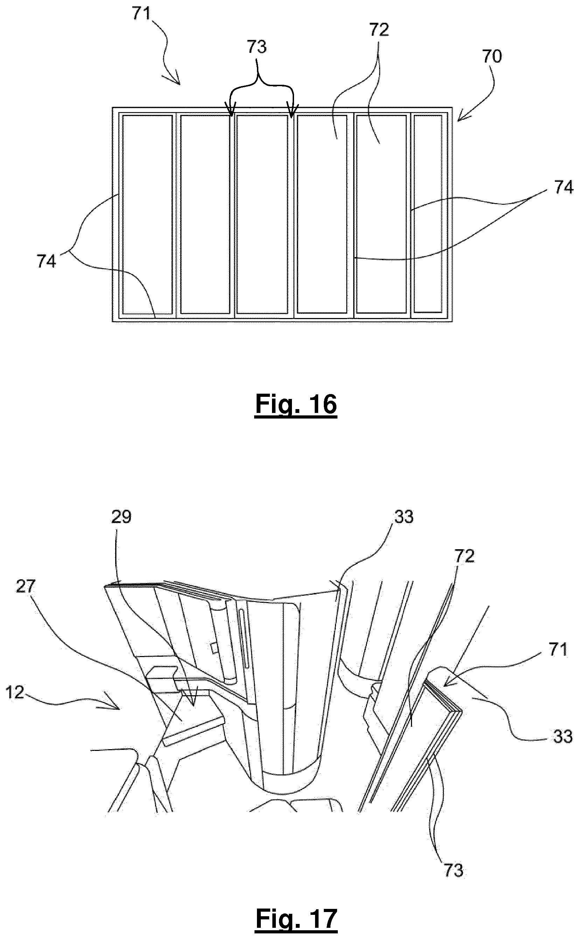

Dans l'exemple de réalisation de la figure 16, le rideau semi-flexible 71 est formé par une pluralité de lames 72 espacées régulièrement entre elles et recouvertes par du tissu 70, les portions du tissu 70 s'étendant entre deux lames 72 adjacentes formant les zones de pliage 73. De la colle 74 pourra être disposée entre les lames 72 et sur tout le contour du tissu 70 pour assurer l'assemblage des différents éléments. Les lames 72 pourront être réalisées dans un matériau plastique rigide ou semi-rigide.

Un bord d'extrémité du rideau semi-flexible 71 est monté rotatif autour d'un axe vertical 75 par rapport à une unité de siège 12, ici l'unité de siège avant.

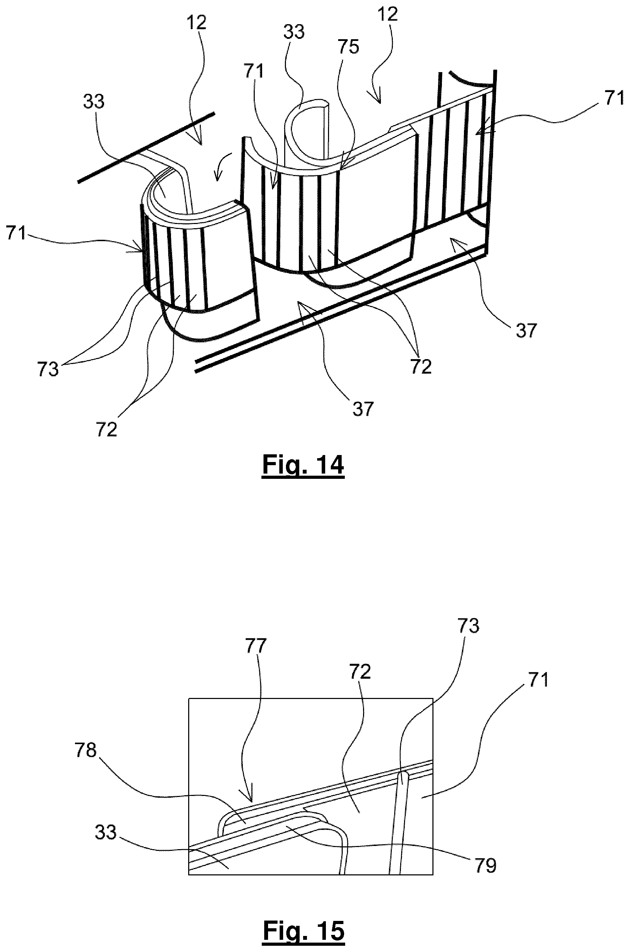

Comme cela est illustré par les figures 13a et 14, le rideau semi-flexible 71 est configuré pour épouser une forme arrondie de la coque 33 de l'unité de siège 12 avant en position rangée. Cela est rendu possible par le fait que les lames 72 sont pliables les unes par rapport aux autres, de sorte que l'ensemble des lames 72 légèrement pliées les unes par rapport aux autres prennent globalement une forme courbe correspondant à la courbure de la coque 33 de l'unité de siège avant 12.

Pour faire passer le rideau 71 de la position rangée à la position déployée, le passager fait tourner le rideau 71 autour de l'axe 75 jusqu'à ce que les lames 72 s'étendent sensiblement dans un même plan, de sorte que le rideau 71 obture le passage transversal 37 entre les deux unités de sièges 12, tel que montré sur les figures 13b et 14.

Comme on peut le voir sur la figure 15, on pourra utiliser des moyens de maintien 77 du rideau 71 en position rangée et en position déployée, notamment de type magnétique. On pourra ainsi utiliser un aimant 78 pour réaliser un collage magnétique du bord d'extrémité libre du rideau 71 contre un support métallique 79 solidaire d'une unité de siège 12.

En variante, comme on peut le voir sur la figure 17, le rideau semi-flexible 71 est configuré pour que les lames 72 verticales soient repliées les unes sur les autres en position rangée. Le rideau 71 présente alors une structure en accordéon dans laquelle les lames 72 se superposent les unes sur les autres sur la majorité de leur surface. En variante, les lames 72 pourront être orientées horizontalement.

Il est à noter que la présente invention n'est pas limitée à un agencement de cabine dans lequel chaque siège 13 est orienté vers le couloir de circulation 21 de la cabine d'avion 10. Elle englobe également tout agencement de cabine d'avion 10 dans lequel il existe un passage transversal 37 disposé entre deux unités de sièges 12 agencées l'une derrière l'autre selon un axe longitudinal X1 de la cabine d'avion 10, permettant un accès direct à un couloir de circulation 21.

Elle est donc également applicable à des arrangements de sièges dans lesquels les sièges sont tournés dans une direction opposée à celle du couloir de circulation 21 (configuration dite de type "Herringbone" en anglais). Alternativement les sièges 13 présentent un axe X2 parallèle à l'axe X1 de la cabine 10.

L'invention pourra également être mise en œuvre avec des sièges installés dans d'autres moyens de transport, comme par exemple des sièges de bus, de trains, ou de bateaux.

Bien évidemment, l'invention n'est pas limitée aux modes de réalisation décrits précédemment et fournis uniquement à titre d'exemple. Elle englobe diverses modifications et autres variantes que pourra envisager l'homme du métier dans le cadre de la présente invention et notamment toutes combinaisons des différents modes de fonctionnement décrits précédemment, pouvant être pris séparément ou en associations, dans le cadre des revendications annexées.

## Revendications

1. Arrangement de sièges (11), notamment destiné à être installé dans une cabine d'avion (10), comprenant:
- au moins une unité de siège (12) "avant" et au moins une unité de siège (12) "arrière" situées l'une derrière l'autre selon un axe longitudinal (X1) de la cabine d'avion (10) et comportant respectivement au moins un siège (13) apte à passer d'une position "assise" à une position "couchette",
- un passage transversal (37) disposé entre l'unité de siège (12) "avant" et l'unité de siège (12) "arrière" pour permettre un accès à un couloir de circulation (21), des moyens de fermeture (40) au moins en partie flexibles, lesdits moyens de fermeture (40) étant mobiles entre une position rangée dans laquelle les moyens de fermeture (40) sont dégagés du passage (37) et une position déployée dans laquelle les moyens de fermeture (40) obturent le passage (37),
- les moyens de fermeture (40) comportant un rideau (41), notamment réalisé au moins en partie en tissu, et un dispositif de rappel (42) du rideau (41) en position rangée de manière à créer une tension sur le rideau (41) lorsque le rideau (41) est en position déployée,
- le dispositif de rappel (42) comportant un enrouleur (48) muni d'un axe (49) autour duquel au moins une partie du rideau (41) est enroulé lorsque le rideau (41) est en position rangée, **caractérisé en ce que**
- le rideau (41) comporte une première partie (45) réalisée dans un tissu fin, dite "partie technique", et une deuxième partie (46) dite "partie esthétique" réalisée dans un tissu épais fixé sur la première partie (45), la deuxième partie (46) présentant des motifs,
- ladite partie technique (45) est enroulée autour de l'axe (49) lorsque le rideau (41) est en position rangée,
- ledit arrangement comporte en outre au moins un guide (51) en translation du rideau (41) fixé sur l'unité de siège (12) avant et des moyens de rigidification (55) du rideau (41), tels que des cordons ou une plaque flexible, lesdits moyens de rigidification (55) étant disposés dans une partie de la zone du rideau (41) destinée à coopérer avec le guide (51), cette zone du rideau (41) correspondant à la partie esthétique (46) du rideau (41).

2. Arrangement de sièges selon la revendication 1, **caractérisé en ce que** l'enrouleur (48) est fixé sur l'unité de siège (12) avant.

3. Arrangement de sièges selon la revendication 1 ou 2, **caractérisé en ce qu'**il comporte des moyens de maintien (56) du rideau (41) en position déployée, tels qu'une poignée (57) destinée à coopérer avec un support (58) porté par l'unité de siège (12) arrière et/ou un dispositif magnétique (59).

4. Arrangement de sièges selon la revendication 1, **caractérisé en ce que** les moyens de rigidification (55) s'étendent au-delà du guide (51).

5. Arrangement de sièges selon l'une quelconque des revendications 1 à 4, **caractérisé en ce que** l'enrouleur (48) est disposé entre un dossier (24) et une coque fixe (33) de l'unité de siège (12) arrière.

6. Arrangement de sièges selon l'une quelconque des revendications 1 à 5, **caractérisé en ce qu'**il comporte des moyens de génération (63) d'un motif lumineux.

7. Arrangement de sièges selon la revendication 6, **caractérisé en ce que** les moyens de génération (63) d'un motif lumineux comportent une source lumineuse (64) et des fils translucides (65) disposés dans une épaisseur du rideau (41).

8. Arrangement de sièges selon la revendication 6 ou 7, **caractérisé en ce que** les moyens de génération (63) d'un motif lumineux comportent une dalle lumineuse (67) disposée à l'intérieur du rideau (41).

9. Arrangement de sièges selon l'une quelconque des revendications 6 à 8, **caractérisé en ce que** les moyens (63) de génération d'un motif lumineux comportent un assemblage de lampes (68), notamment de type LED.

10. Arrangement de sièges selon l'une quelconque des revendications 6 à 9, **caractérisé en ce que** des perforations (69) réalisées dans le rideau (41) permettent de faire apparaître un motif souhaité.

## Patentansprüche

1. Sitzanordnung (11), insbesondere zum Einbau in eine Flugzeugkabine (10), wobei die Sitzanordnung umfasst:
- mindestens eine vordere Sitzeinheit (12) und mindestens eine hintere Sitzeinheit (12), die entlang einer Längsachse (X1) der Flugzeugkabine (10) hintereinander angeordnet sind und jeweils mindestens einen von einer Sitzposition in eine Bettposition bewegbaren Sitz (13) umfassen,
- eine Querpassage (37) zwischen der vorderen Sitzeinheit (12) und der hinteren Sitzeinheit (12), um den Zugang zu einem Kabinengang (21) zu ermöglichen,
- mindestens teilweise flexible Verschlussmittel (40), wobei die Verschlussmittel (40) zwischen einer verstauten Position, in der die Verschlussmittel (40) vom Quergang (37) freigegeben sind, und einer ausgefahrenen Position, in der die Verschlussmittel (40) den Quergang (37) verschließen, beweglich sind,
- wobei die Verschlussmittel (40) einen Vorhang (41), insbesondere zumindest teilweise aus Stoff, und eine Vorrichtung (42) zum Zurückführen des Vorhangs (41) in die verstaute Position umfassen, um eine Spannung auf dem Vorhang (41) zu erzeugen, wenn sich der Vorhang (41) in der ausgefahrenen Position befindet,
- wobei die Rückholvorrichtung (42) einen Wickler (48) umfasst, der mit einer Achse (49) versehen ist, um die zumindest ein Teil des Vorhangs (41) gewickelt wird, wenn sich der Vorhang (41) in der verstauten Position befindet, **dadurch gekennzeichnet, dass**
- der Vorhang (41) besteht aus einem ersten Teil (45), dem sogenannten technischen Teil, aus feinem Gewebe und einem dickem Gewebe, der am ersten Teil (45) befestigt ist, besteht, wobei der zweite Teil (46) Muster aufweist,
- das technische Teil (45) um die Achse (49) gewickelt ist, wenn sich der Vorhang (41) in der verstauten Position befindet,
- die Anordnung ferner mindestens eine an der vorderen Sitzeinheit (12) befestigte Verschiebungsführung (51) für den Vorhang (41) und Versteifungsmittel (55) für den Vorhang (41), wie zum Beispiel Schnüre oder eine flexible Platte, umfasst, wobei die Versteifungsmittel (55) in einem Teil der Zone des Vorhangs (41) angeordnet sind, die mit der Führung (51) zusammenwirkt, wobei diese Zone des Vorhangs (41) dem ästhetischen Teil (46) des Vorhangs (41) entspricht.

2. Sitzanordnung nach Anspruch 1, **dadurch gekennzeichnet, dass** der Wickler (48) an der vorderen Sitzeinheit (12) befestigt ist.

3. Sitzanordnung nach Anspruch 1 oder 2, **dadurch gekennzeichnet, dass** sie Mittel (56) zum Halten des Vorhangs (41) in der ausgefahrenen Position, wie zum Beispiel einen Griff (57) zum Zusammenwirken mit einer von der hinteren Sitzeinheit (12) getragenen Halterung (58) und/oder eine Magnetvorrichtung (59), umfasst.

4. Sitzanordnung nach Anspruch 1, **dadurch gekennzeichnet, dass** sich die Versteifungsmittel (55) über die Führung (51) hinaus erstrecken.

5. Sitzanordnung nach einem der Ansprüche 1 bis 4, **dadurch gekennzeichnet, dass** der Wickler (48) zwischen einer Rückenlehne (24) und einer festen Schale (33) der hinteren Sitzeinheit (12) angeordnet ist.

6. Sitzanordnung nach einem der Ansprüche 1 bis 5, **dadurch gekennzeichnet, dass** sie Mittel (63) zur Erzeugung eines Lichtmusters umfasst.

7. Sitzanordnung nach Anspruch 6, **dadurch gekennzeichnet, dass** die Mittel (63) zum Erzeugen eines Lichtmusters eine Lichtquelle (64) und in einer Dicke des Vorhangs (41) angeordnete lichtdurchlässige Fäden (65) umfassen.

8. Sitzanordnung nach Anspruch 6 oder 7, **dadurch gekennzeichnet, dass** die Mittel (63) zur Erzeugung eines Lichtmusters ein innerhalb des Vorhangs (41) angeordnetes Lichtpanel (67) umfassen.

9. Sitzanordnung nach einem der Ansprüche 6 bis 8, **dadurch gekennzeichnet, dass** die Mittel (63) zum Erzeugen eines Lichtmusters einen Lampensatz (68), insbesondere vom LED-Typ, umfassen.

10. Sitzanordnung nach einem der Ansprüche 6 bis 9, **dadurch gekennzeichnet, dass** Perforationen (69) im Vorhang (41) das Erscheinen eines gewünschten Musters ermöglichen.

## Claims

1. A seat arrangement (11), in particular to be installed in an aircraft cabin (10), said seat arrangement comprising:
- at least one front seat unit (12) and at least one rear seat unit (12) located one behind the other along a longitudinal axis (X1) of the aircraft cabin (10) and respectively comprising at least one seat (13) capable of moving from a seating position to a bed position,
- a transverse passage (37) between the front seat unit (12) and the rear seat unit (12) to allow access to an aisle (21),
- at least partly flexible closing means (40), said closing means (40) being movable between a stowed position in which the closing means (40) are released from the passage (37) and a deployed position in which the closing means (40) close the passage (37),
- the closing means (40) comprising a curtain (41), in particular made at least partly of fabric, and a device (42) for returning the curtain (41) to the stored position so as to generate a tension on the curtain (41) when the curtain (41) is in the deployed position,
- the return device (42) comprising a winder (48) provided with an axis (49) around which at least part of the curtain (41) is wound when the curtain (41) is in the stored position,
**characterized in that**
- the curtain (41) comprises a first part (45) made of a fine fabric, so-called technical part, and a second part (46), so-called aesthetic part, made of a thick fabric fixed to the first part (45), the second part (46) showing patterns,
- said technical part (45) is wound around the axis (49) when the curtain (41) is in the stored position,
- said arrangement further comprises at least one translating guide (51) for the curtain (41) fixed to the front seat unit (12) and stiffening means (55) for the curtain (41), such as cords or a flexible plate, said stiffening means (55) being arranged in a part of the area of the curtain (41) cooperating with the guide (51), this area of the curtain (41) corresponding to the aesthetic part (46) of the curtain (41).

2. The seat arrangement according to claim 1, **characterized in that** the winder (48) is fixed to the front seat unit (12).

3. The seat arrangement according to claim 1 or 2, **characterized in that** it comprises means (56) for holding the curtain (41) in the deployed position, such as a handle (57) for cooperating with a support (58) carried by the rear seat unit (12) and/or a magnetic device (59).

4. The seat arrangement according to claim 1, **characterized in that** the stiffening means (55) extend beyond the guide (51).

5. The seat arrangement according to any one of the claims 1 to 4, **characterized in that** the winder (48) is arranged between a backrest (24) and a fixed shell (33) of the rear seat unit (12).

6. The seat arrangement according to any one of the claims 1 to 5, **characterized in that** it comprises means (63) for generating a light pattern.

7. The seat arrangement according to claim 6, **characterized in that** the means (63) for generating a light pattern comprise a light source (64) and translucent threads (65) arranged in a thickness of the curtain (41).

8. The seating arrangement according to claim 6 or 7, **characterized in that** the means (63) for generating a light pattern comprise a light panel (67) arranged inside the curtain (41).

9. The seat arrangement according to any one of the claims 6 to 8, **characterized in that** the means (63) for generating a light pattern comprise an assembly of lamps (68), in particular of the LED type.

10. The seat arrangement according to any one of the claims 6 to 9, **characterized in that** perforations (69) in the curtain (41) allow a desired pattern to appear.
